# EUROPEAN PATENT SPECIFICATION

(11) **EP 0 331 633 B1**
(45) Date of publication and mention of the grant of the patent: **02.01.1997**
(21) Application number: 89810121.7
(22) Date of filing: 16.02.1989
(51) Int. Cl.: C08F 8/00, G02B 1/00, C08F 20/36

(54) **Hydrophilic modifier monomers**
Hydrophile Modifizierungsmonomere
Monomères modifiants hydrophiles

(30) Priority: 26.02.1988 US 160623
(43) Date of publication of application: 06.09.1989
(73) Proprietor: CIBA-GEIGY AG, 4002 Basel (CH)
(72) Inventor: Molock, Frank, Lawrenceville Georgia 30245 (US); Robertson, J. Richard, Alpharetta Georgia 30201 (US); Su, Kai Chiang, Alpharetta Georgia 30201 (US)

(56) References cited:
- EP-A- 0 134 861
- EP-A- 0 216 074
- EP-A- 0 226 079
- EP-A- 0 249 306
- EP-A- 0 276 631
- GB-A- 2 182 661
- US-A- 3 928 299
- US-A- 4 670 506

## Description

The invention relates to hydrophilic monomers and to their use for modification of oligomers, particularly oligomers used in the manufacture of contact lenses, to increase hydrophilicity of resulting polymers and increase mold compatibility in the manufacture of such molded polymers.

There is an extensive body of literature on hydrophilic monomers in the art and a large number of such monomers is commercially available. These monomers impart hydrophilicity, water absorption, and/or improve the wetting properties of materials having them copolymerized therein over the same material absent such monomers. They also result in highly hydrophilic, highly absorbent, and highly wettable homopolymeric materials. These commercial monomers can be obtained from typical monomeric suppliers such as ROHM Tech, typically under the MHOROMER®D series; Sartomer; and Alcolac, typically under the SIPOMER® series.

A general characteristic of such known modifiers is that there is a hydrophilic group and a copolymerizable group. A typical example is N-vinyl pyrrolidone; another is hydroxyethylmethacrylate. Each of these is suitable for copolymerizing with other monomers or oligomers containing one or more free (meth)acrylic or vinylic groups. The addition of the free hydroxy or the amide increases the hydrophilicity, water absorbability and wettability of the resulting polymers over those not having such monomers present.

For many utilities, it is desired that the polymeric materials resulting therefrom be in molded form. This is typical in the field of contact lenses. Also frequently, molds are poly(methyl methacrylate) and copolymerizing a) the aforementioned modifying monomers with b) the monomers or oligomers being modified in such molds results in etching and scarring of the molds. This is extremly disadvantageous for ultimate polymer utilities which require mar free surfaces, i.e. high quality optical surfaces. In these situations, molds must be replaced extremely frequently resulting in high production costs and slowed production rates.

It is therefore an object of the invention to remedy the above defects and provide a hydrophilic monomer which will substantially reduce the amount of mold etching in preparing hydrophilically modified material.

Another object of the invention is to provide hydrophilically modified polymers.

Another object of the invention is to provide contact lenses having increased wettability and/or water absorption.

A still further object of the invention is to provide a contact lens which is surface modified by a hydrophilic modifier monomer.

These and other objects can be realized by utilizing hydrophilic modifier monomers of the formula I,

(X-div)_{z}Hy (I)

wherein X is a polymerizable ethylenically unsaturated group selected from vinyl, 1-lower alkyl vinyl, 2-lower alkyl vinyl, 1,2-di(lower alkyl)vinyl and vinyl-lower alkyl,
div is a divalent group selected from alkylene of 2-6 carbons which is terminated on one side by carbonyloxy,
   ca) the carbonyl being bound to X and said alkylene being interrupted once by -NH(CO)O- or
   cb) terminated at the other side by -NH(CO)-, the amidocarbonyl being bound to Hy,
and a divalent -C(O)O-aliphatic-OC(O)NH-aryl-NHC(O)O-aliphatic-group with the terminal carbonyl group being bound to X, wherein aryl is phenyl or naphthyl, unsubstituted or substituted by halogen or C₁₋₄ alkyl, and wherein each of the aliphatic groups is alkyl of up to 10 carbon atoms,
z is an integer of 1 up to the valence of Hy and where z is less than the valence of Hy, the remaining valences of Hy are taken up with hydrogens; and
Hy is a hydrophilic group selected from
   morpholino; cyclic mono amide radicals of 5-7 ring members which are selected from carbon and one nitrogen; saturated and unsaturated cyclic radicals having 5-6 ring members of the formula III, 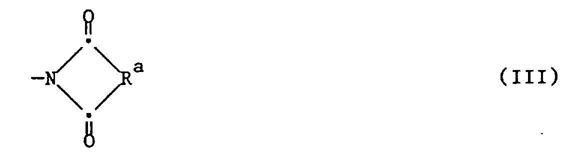 wherein R^{a} is alkylene or alkenylene of 2 or 3 carbons, cyclic amides having 6-7 ring members of the formula IV, 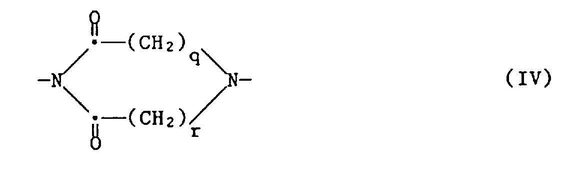 wherein q and r are each independently 0-2,
   cyclic amines of the formula 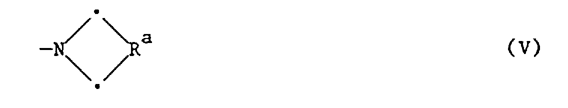 wherein R^{a} is alkylene or alkenylene of 2 or 3 carbons;
   each of which is unsubstituted or substituted by hydroxy -C₁₋₅ alkyl, carboxy, or lower alkyl; a divalent group of formula XVa 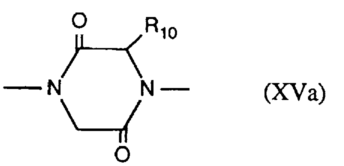 wherein R¹⁰ is hydrogen or carboxy, and 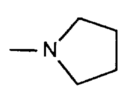 which is substituted by one hydroxy.
X is preferably vinyl, 1- or 2-lower alkyl vinyl, more preferably 1-methyl vinyl, or 2-methyl vinyl, or allyl.

Preferably Hy is selected from
ba) morpholino which is unsubstituted or mono- up to tetra-substituted by lower alkyl, preferably methyl or ethyl;
bb) an amide of the formula XII 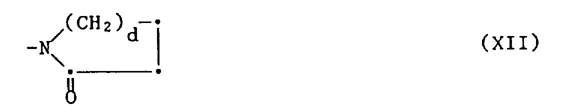 wherein d is 1-3, preferably 1; each of which is unsubstituted or substituted, preferably mono or di substituted, by lower alkyl, preferably methyl or ethyl;
bc) a group of formula XIII, 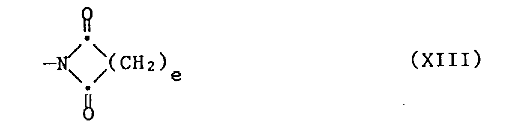 wherein e is 2-3, preferably 2, each of which is unsubstituted or substituted by lower alkyl, preferably methyl or ethyl;
bd) a divalent group of one of the formulae XIV, XV, XVa, XVI, XVIIa or XVIIb, 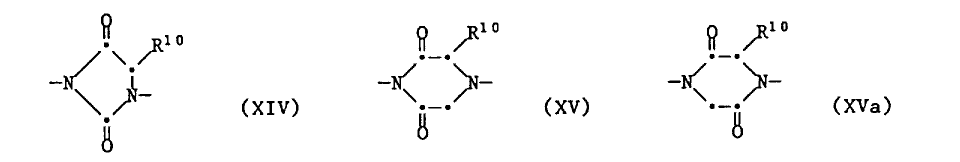 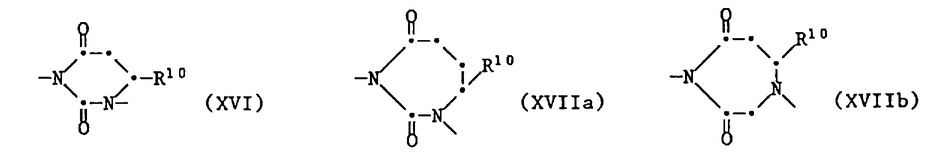 wherein R¹⁰ is hydrogen or carboxy;
be) 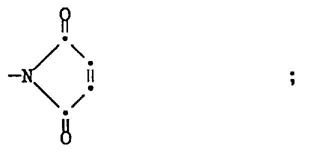
bf) 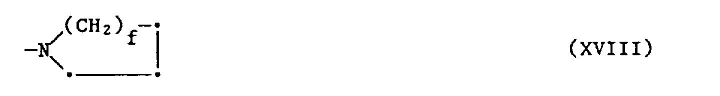 wherein f is one or two, each of which is unsubstituted or substituted by lower alkyl, preferably methyl or ethyl;
bg)

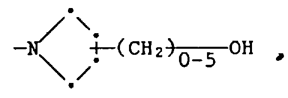

Preferably div is selected from

-CO-O-(CH₂)₂NHCOO(CH₂)₂-;

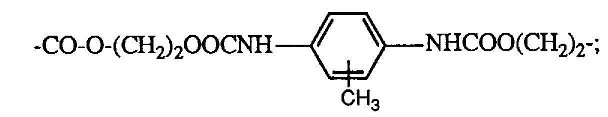

and

-CO-O-(CH₂)₂NHCO-;

in which in each case the left hand bond being bound to X.

Hy is most preferably pyrrolid-5-one-1-yl or morpholin-1-yl.

The alkylene of div is most preferably of 2 to 4 carbon atoms.

In the group div, aryl substituted by C₁₋₄ alkyl is most preferably substituted by methyl. In the group div, each of the aliphatic groups is more preferably an alkylene of up to 5 carbon atoms. Most preferably such aliphatic groups are -CH₂C₂-.

Most preferred are the monomers of formula I wherein X is vinyl or 1-methyl vinyl; z is one;
div is selected from -C(O)O-C₂₋₆-alkyl- which is interrupted once by -NHC(O)O- within the alkyl portion, the terminal carbonyl group being bound to X;
-C(O)O-C₂₋₆-alkyl-NHCO-, the terminal carbonyl group of the oxycarbonyl portion being bound to X; and -C(O)O-C₂₋₆-alkyl- which is interrupted once by -OCONH-aryl-NHCOO- in the alkyl portion, the terminal carbonyl group of which is bound to X; wherein aryl is phenyl or phenyl substituted by C₁₋₄-alkyl, preferably methyl;
and Hy is pyrrolidon-5-one-1-yl or morpholin-1-yl.

The most highly preferred monomers of the invention are of formula XIX, XX and XXIV: 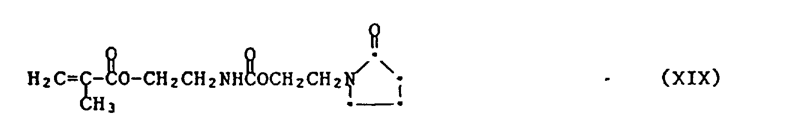 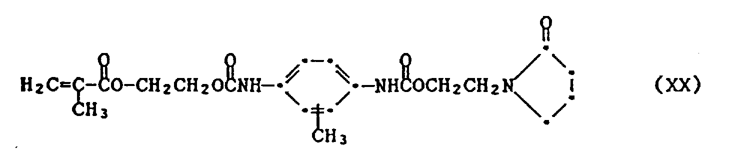 and

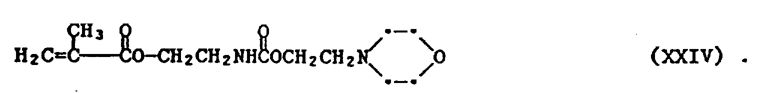

The hydrophilic modifying monomers of the invention can be made in a number of ways, the individual steps of which are known in the art. The starting materials are all well known to those in the art and most are commercially available.

One set of starting materials is X-E, W-L-Y, and G-Hy wherein E is coreactive with W, and Y is coreactive with G. When the reactions of E with W and Y with G are complete, the group -EW-L-YG- is -div-. The group -L- can be a simple aliphatic hydrocarbon chain without any substituents or interruptions or terminating groups. Alternatively, it can be a complex group having a number of interrupting and/or terminating groups as well as substituents.

For example, toluene diisocyanate can represent a simple W-L-Y compound. Reaction of 1 mole thereof with 1 mole of N-hydroxyethyl pyrrolidone (an G-Hy compound) yields a compound of the formula

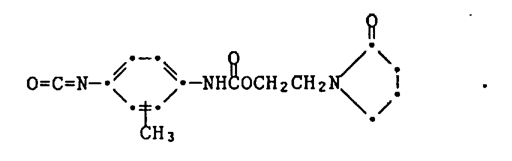

This can then be reacted with 1 mole of 2-hydroxyethylmethacrylate (an X-E compound) to yield the compound of formula XX.

The sequence of reactions can, of course be reversed so that the X-E compound and the W-L-Y compound are first reacted and then a G-Hy compound is reacted with the result. Of course, when G is not reactive with E or X and E is not reactive with G or Hy all three components can be added together simultaneously.

The compound of formula XIX can likewise be prepared from isocyanatoethylmethacrylate (IEM) and 2-hydroxyethyl pyrrolidone.

As one of ordinary skill can appreciate, replacing the N-(2-hydroxyethyl)-pyrrolidone with a N-(2-hydroxyethyl)morpholine yields the product shown in formula XXIV. Synthetic routes to the rest of the monomers within the invention are within the ability of one of ordinary skill in this art.

Based on the foregoing, the following examples are presented to illustrate, but not limit the invention.

Example 1: To a clean, dry 100 ml round bottom flask equipped with condenser, nitrogen inlet and thermomether are added 15.53 g, 0.10 moles isocyanatoethyl methacrylate, 0.02 g dibutyl tin dilaurate and 50 ml methylene chloride. The mixture is stirred under a nitrogen atmosphere to effect solution. To the solution is added 12.93 g, 0.10 moles hydroxyethyl pyrrolidone. After 1.5 hours the isocyanate band is not observed in the FT infrared spectrum. The solvent is removed via stirring under a dry-air purge.

Example 2: The above modifier of Example 1 is added to
a) styrene isocyanate endcapped polypropylene glycol 4000,
b) the monomers of formula V of US-A-4,780,488, filed June 5, 1987, or
c) the monomers of formula I of US-A-4,740,533, filed July 28, 1987
in amounts of 10 % or 15% by weight and cured. The resulting polymers all have increased water content over the corresponding polymer without the compound of example 1 present.

## Claims (Claims for the following Contracting State(s): AT, BE, CH, DE, FR, GB, GR, IT, LI, LU, NL, SE)

1. A compound of the formula I,
(K-div)_{z}Hy (I)
wherein X is a polymerizable ethylenically unsaturated group selected from vinyl, 1-lower alkyl vinyl, 2-lower alkyl vinyl, 1,2-di(lower alkyl)vinyl and vinyl-lower alkyl,
div is a divalent group selected from alkylene of 2-6 carbons which is terminated on one side by carbonyloxy,
ca) the carbonyl being bound to X and said alkylene being interrupted once by -NH(CO)O- or
cb) terminated at the other side by -NH(CO)-, the amidocarbonyl being bound to Hy,
and a divalent -C(O)O-aliphatic-OC(O)NH-aryl-NHC(O)O-aliphatic-group with the terminal carbonyl group being bound to X, wherein aryl is phenyl or naphthyl, unsubstituted or substituted by halogen or C₁₋₄ alkyl, and wherein each of the aliphatic groups is alkyl of up to 10 carbon atoms,
z is an integer of 1 up to the valence of Hy and where z is less than the valence of Hy, the remaining valences of Hy are taken up with hydrogens; and
Hy is a hydrophilic group selected from
morpholino; cyclic mono amide radicals of 5-7 ring members which are selected from carbon and one nitrogen; saturated and unsaturated cyclic radicals having 5-6 ring members of the formula III, 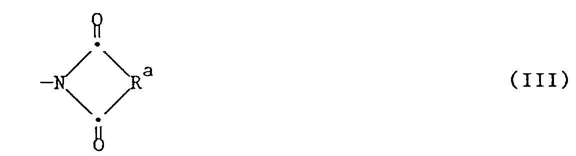 wherein R^{a} is alkylene or alkenylene of 2 or 3 carbons, cyclic amides having 6-7 ring members of the formula IV, 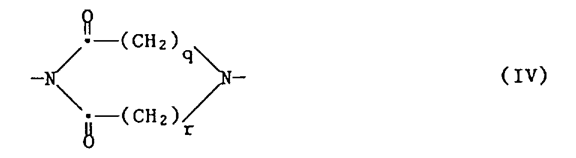 wherein q and r are each independently 0-2,
cyclic amines of the formula 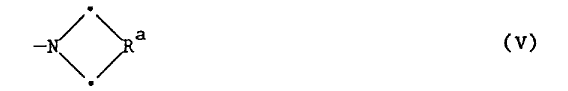 wherein R^{a} is alkylene or alkenylene of 2 or 3 carbons;
each of which is unsubstituted or substituted by hydroxy -C₁₋₅ alkyl, carboxy, or lower alkyl,
a divalent group of formula XVa 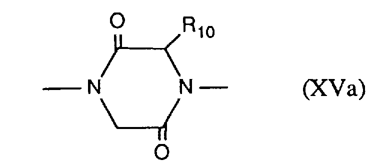 wherein R¹⁰ is hydrogen or carboxy, and 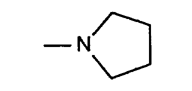 which is substituted by one hydroxy.

2. The compound of claim 1 wherein X is 1-methylvinyl, 2-methylvinyl, or allyl.

3. The compound of claim 1 wherein Hy is selected from
ba) morpholino which is unsubstituted or mono- up to tetra-substituted by lower alkyl;
bb) an amide of the formula XII 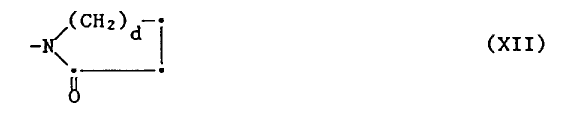 wherein d is 1-3; each of which is unsubstituted or substituted by lower alkyl;
bc) a group of formula XIII, 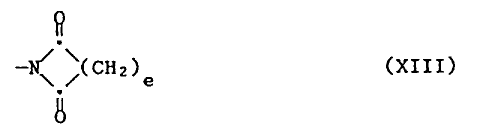 wherein e is 2-3, each of which is unsubstituted or substituted by lower alkyl;
bd) a divalent group of one of the formulae XIV, XV, XVa, XVI, XVIIa or XVIIb, 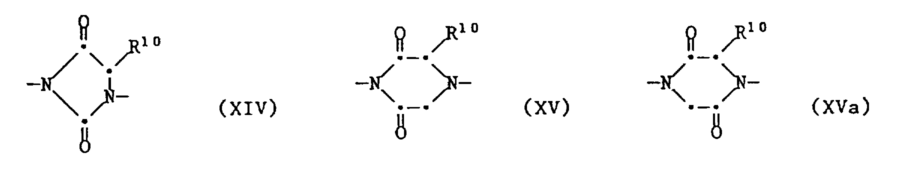 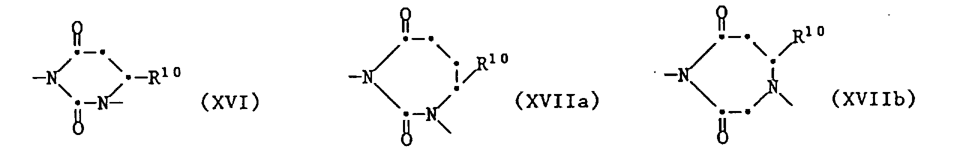 wherein R¹⁰ is hydrogen or carboxy;
be) 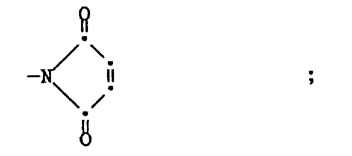
bf) 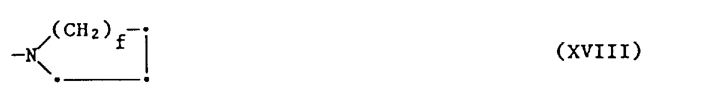 wherein f is one or two, each of which is unsubstituted or substituted by lower alkyl;
bg)

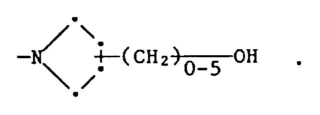

4. The compound of claim 1 wherein div is selected from
-CO-O-(CH₂)₂NHCOO(CH₂)₂-; 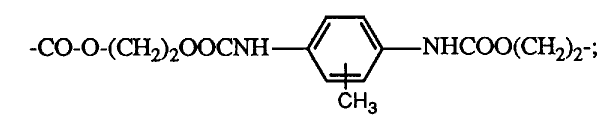
and
-CO-O-(CH₂)₂NHCO-;
in which in each case the left hand bond being bound to X.

5. The compound of claim 1 wherein Hy is pyrrolid-5-one-1-yl or morpholin-1-yl.

6. The compound of claim 1 wherein X is vinyl or 1-methyl vinyl, z is one;
div is selected from -C(O)O-C₂₋₆-alkyl- which is interrupted once by -NHC(O)O- within the alkyl portion, the terminal carbonyl group being bound to X;
-C(O)O-C₂₋₆-alkyl-NHCO-, the terminal carbonyl group of the oxycarbonyl portion being bound to X; and -C(O)O-C₂₋₆-alkyl- which is interrupted once by -OCONH-aryl-NHCOO- in the alkyl portion, the terminal carbonyl group of which is bound to X; wherein aryl is phenyl or phenyl substituted by C₁₋₄-alkyl,
and Hy is pyrrolidon-5-one-1-yl or morpholin-1-yl.

7. The compound of claim 1 which is selected from a compound of formula 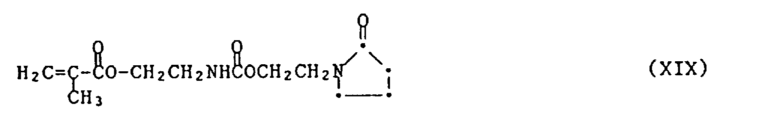 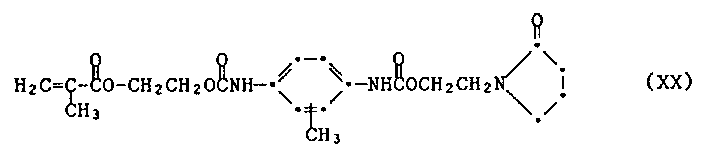 and

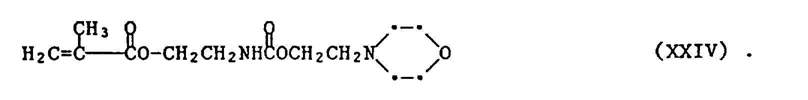

8. Use of a compound of formula I of claim 1 for the manufacture of a homopolymer or copolymer containing polymerized units of said compound of formula I.

## Claims (Claims for the following Contracting State(s): ES)

1. A process for the manufacture of a compound of the formula I,
(X-div)_{z}Hy (I)
wherein X is a polymerizable ethylenically unsaturated group selected from vinyl, 1-lower alkyl vinyl, 2-lower alkyl vinyl, 1,2-di(lower alkyl)vinyl and vinyl-lower alkyl,
div is a divalent group selected from alkylene of 2-6 carbons which is terminated on one side by carbonyloxy,
ca) the carbonyl being bound to X and said alkylene being interrupted once by -NH(CO)O- or
cb) terminated at the other side by -NH(CO)-, the amidocarbonyl being bound to Hy,
and a divalent -C(O)O-aliphatic-OC(O)NH-aryl-NHC(O)O-aliphatic-group with the terminal carbonyl group being bound to X, wherein aryl is phenyl or naphthyl, unsubstituted or substituted by halogen or C₁₋₄ alkyl, and wherein each of the aliphatic groups is alkyl of up to 10 carbon atoms,
z is an integer of 1 up to the valence of Hy and where z is less than the valence of Hy, the remaining valences of Hy are taken up with hydrogens; and
Hy is a hydrophilic group selected from morpholino; cyclic mono amide radicals of 5-7 ring members which are selected from carbon and one nitrogen; saturated and unsaturated cyclic radicals having 5-6 ring members of the formula III, 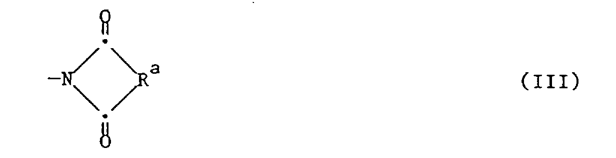 wherein R^{a} is alkylene or alkenylene of 2 or 3 carbons,
cyclic amides having 6-7 ring members of the formula IV, 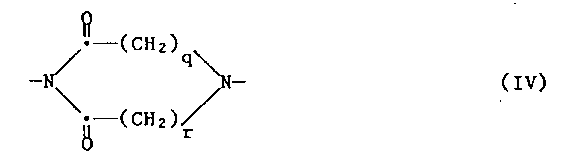 wherein q and r are each independently 0-2,
cyclic amines of the formula 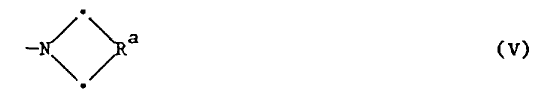 wherein R^{a} is alkylene or alkenylene of 2 or 3 carbons;
each of which is unsubstituted or substituted by hydroxy -C₁₋₅ alkyl, carboxy, or lower alkyl,
a divalent group of formula XVa 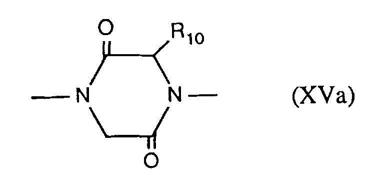 wherein R¹⁰ is hydrogen or carboxy, and 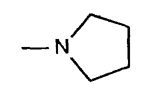 which is substituted by one hydroxy, characterized by reacting a set of starting materials X-E, W-L-Y and G-Hy wherein E is coreactive with W and Y is coreactive with G such that when the reactions of E with W and Y with G are complete, the group -EW-L-YG- is -div-, in a manner known per se.

2. The process of claim 1 wherein X is 1-methylvinyl, 2-methylvinyl, or allyl.

3. The process of claim 1 wherein Hy is selected from
ba) morpholino which is unsubstituted or mono- up to tetra-substituted by lower alkyl;
bb) an amide of the formula XII 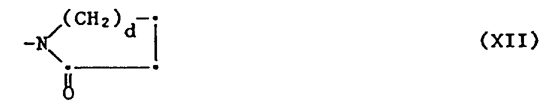 wherein d is 1-3; each of which is unsubstituted or substituted by lower alkyl;
bc) a group of formula XIII, 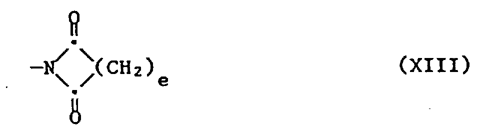 wherein e is 2-3, each of which is unsubstituted or substituted by lower alkyl;
bd) a divalent group of one of the formulae XIV, XV, XVa, XVI, XVIIa or XVIIb, 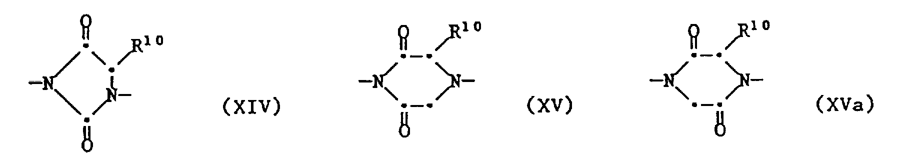 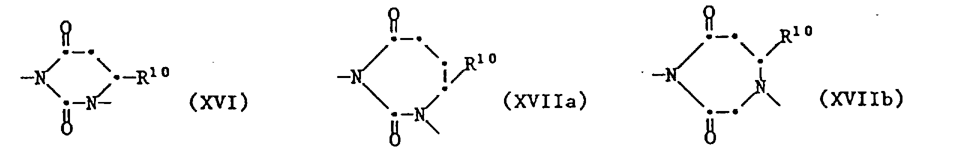 wherein R¹⁰ is hydrogen or carboxy;
be) 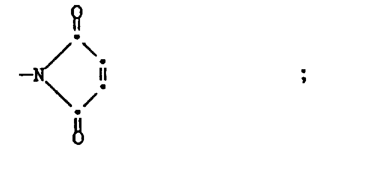
bf) 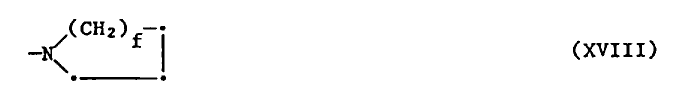 wherein f is one or two, each of which is unsubstituted or substituted by lower alkyl;
bg)

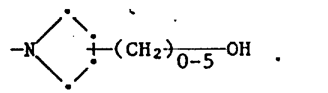

4. The process of claim 1 wherein div is selected from
-CO-O-(CH₂)₂NHCOO(CH₂)₂-; 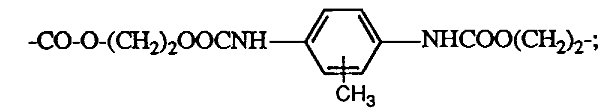
and -CO-O-(CH₂)₂NHCO-;
in which in each case the left hand bond being bound to X.

5. The process of claim 1 wherein Hy is pyrrolid-5-one-1-yl or morpholin-1-yl.

6. The process of claim 1 wherein X is vinyl or 1-methyl vinyl, z is one;
div is selected from -C(O)O-C₂₋₆-alkyl- which is interrupted once by -NHC(O)O- within the alkyl portion, the terminal carbonyl group being bound to X;
-C(O)O-C₂₋₆-alkyl-NHCO-, the terminal carbonyl group of the oxycarbonyl portion being bound to X; and -C(O)O-C₂₋₆-alkyl- which is interrupted once by -OCONH-aryl-NHCOO- in the alkyl portion, the terminal carbonyl group of which is bound to X; wherein aryl is phenyl or phenyl substituted by C₁₋₄-alkyl,
and Hy is pyrrolidon-5-one-1-yl or morpholin-1-yl.

7. The process of claim 1 for the manufacture of a compound of formula 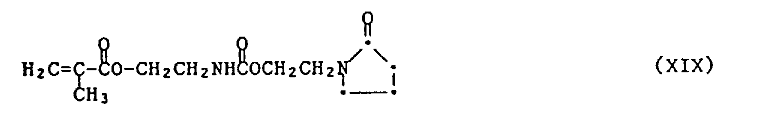 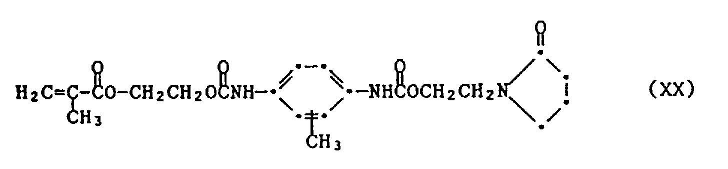 and

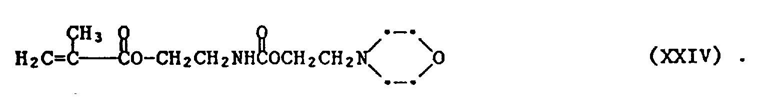

8. Use of a compound of formula I of claim 1 for the manufacture of a homopolymer or copolymer containing polymerized units of said compound of formula I.

## Patentansprüche (Patentansprüche für folgende(n) Vertragsstaat(en): AT, BE, CH, DE, FR, GB, GR, IT, LI, LU, NL, SE)

1. Verbindung der Formel I
(X-div)_{z}Hy (I)
worin X eine polymerisierbare, ethylenisch ungesättigte Gruppe, ausgewählt aus Vinyl, 1-Niederalkylvinyl, 2-Niederalkylvinyl, 1,2-Di(niederalkyl)vinyl und Vinylniederalkyl, darstellt,
div eine zweiwertige Gruppe darstellt, ausgewählt aus Alkylen mit 2-6 Kohlenstoffatomen, beendet an einer Seite durch Carbonyloxy, wobei
ca) das Carbonyl an X gebunden ist und das Alkylen einmal durch -NH(CO)O- unterbrochen ist oder
cb) an einer Seite durch -NH(CO)- beendet ist, wobei das Amidocarbonyl an Hy gebunden ist
und einer zweiwertigen -C(O)O-aliphatischen-OC(O)NH-Aryl-NHC(O)O-aliphatischen Gruppe, wobei die endständige Carbonylgruppe an X gebunden ist, worin Aryl Phenyl oder Naphthyl, unsubstituiert oder substituiert mit Halogen oder C₁₋₄-Alkyl, darstellt und wobei jede der aliphatischen Gruppen Alkyl mit bis zu 10 Kohlenstoffatomen darstellt,
z eine ganze Zahl von 1 bis zur Wertigkeit von Hy ist und wobei z weniger als die Wertigkeit von Hy ist, und die verbleibenden Wertigkeiten von Hy mit Wasserstoff abgesättigt sind; und
Hy eine hydrophile Gruppe darstellt, ausgewählt aus Morpholino; cyclischen Monoamidresten mit 5-7 Ringgliedern, die ausgewählt sind aus Kohlenstoffatomen und einem Stickstoffatom; gesättigten und ungesättigten cyclischen Resten mit 5-6 Ringgliedern der Formel III, 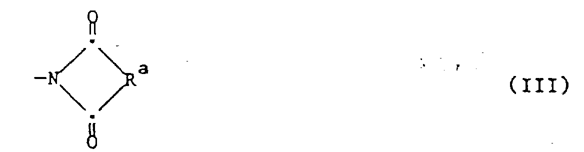
worin R^{a} Alkylen oder Alkenylen mit 2 oder 3 Kohlenstoffatomen, bedeutet,
cyclischen Amiden mit 6-7 Ringgliedern der Formel IV 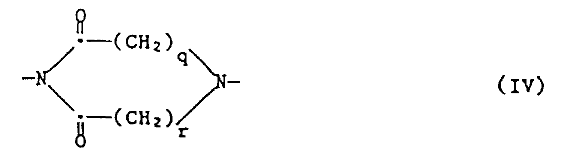
worin q und r jeweils unabhängig 0-2 sind,
cyclischen Aminen der Formel 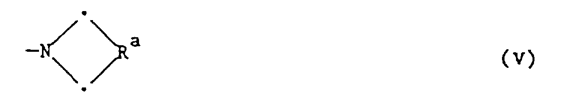
worin R^{a} Alkylen oder Alkenylen mit 2 oder 3 Kohlenstoffatomen darstellt, jeweils unsubstituiert oder substituiert mit Hydroxy-C₁₋₅-alkyl, Carboxy oder Niederalkyl;
einer zweiwertigen Gruppe der Formel XVa 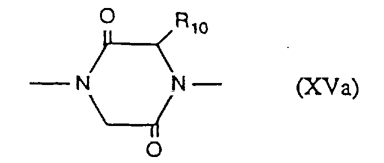
worin R¹⁰ Wasserstoff oder Carboxy darstellt, und 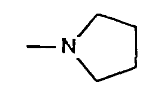
substituiert mit einer Hydroxygruppe.

2. Verbindung nach Anspruch 1, worin X 1-Methylvinyl, 2-Methylvinyl oder Allyl darstellt.

3. Verbindung nach Anspruch 1, worin Hy ausgewählt ist aus
ba) Morpholino, das unsubstituiert oder mit Niederalkyl mono- bis tetra-substituiert ist;
bb) einem Amid der Formel XII 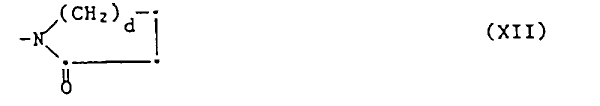 worin d 1-3 ist, jeweils unsubstituiert oder substituiert mit Niederalkyl;
bc) einer Gruppe der Formel XIII 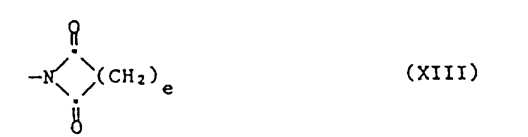 worin e 2-3 ist, jeweils unsubstituiert oder substituiert mit Niederalkyl;
bd) einer zweiwertigen Gruppe einer der Formeln XIV, XV, XVa, XVI, XVIIa oder XVIIb, 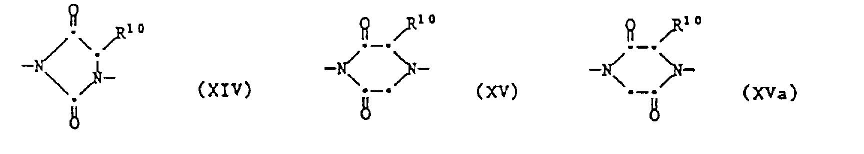 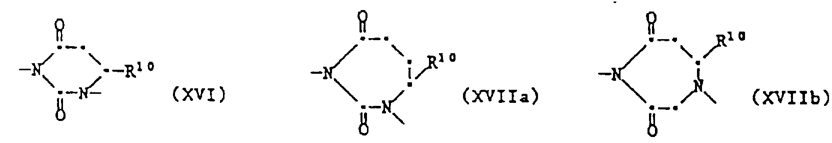 worin R¹⁰ Wasserstoff oder Carboxy darstellt,
be) 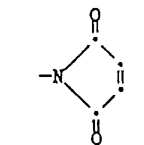
bf) 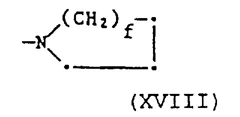 worin f eins oder zwei ist, jeweils unsubstituiert oder mit Niederalkyl substituiert;
bg)

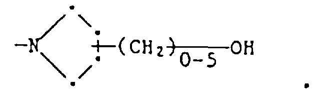

4. Verbindung nach Anspruch 1, worin div ausgewählt ist aus
-CO-O-(CH₂)₂NHCOO(CH₂)₂-; 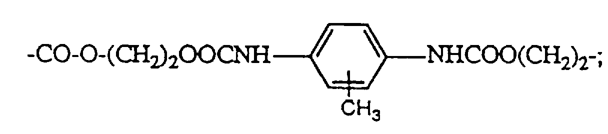
und
-CO-O-(CH₂)₂NHCO-;
worin in jedem Fall die linke Bindung an X gebunden ist.

5. Verbindung nach Anspruch 1, worin Hy Pyrrolid-5-on-1-yl oder Morpholin-1-yl darstellt.

6. Verbindung nach Anspruch 1, worin X Vinyl oder 1-Methylvinyl darstellt, z 1 ist; div ausgewählt ist aus -C(O)O-C₂₋₆-Alkyl-, das einmal mit -NHC(O)O- innerhalb des Alkylanteils unterbrochen ist, wobei die endständige Carbonylgruppe an X gebunden ist; -C(O)O-C₂₋₆-Alkyl-NHCO-, wobei die endständige Carbonylgruppe des Oxycarbonylanteils an X gebunden ist; und -C(O)O-C₂₋₆-Alkyl-, das einmal mit -OCONH-Aryl-NHCOO- in dem Alkylanteil unterbrochen ist, wobei die endständige Carbonylgruppe davon an X gebunden ist, worin Aryl Phenyl oder Phenyl, substituiert mit C₁₋₄-Alkyl, darstellt und Hy Pyrrolidon-5-on-1-yl oder Morpholin-1-yl darstellt.

7. Verbindung nach Anspruch 1, ausgewählt aus einer Verbindung der Formel 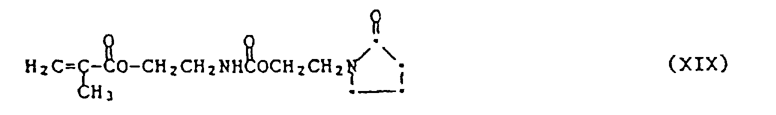 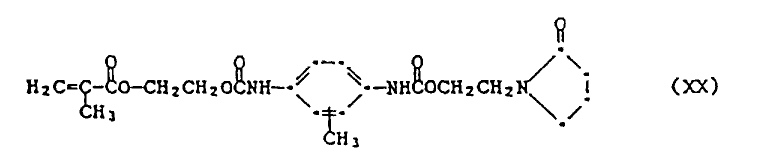 und

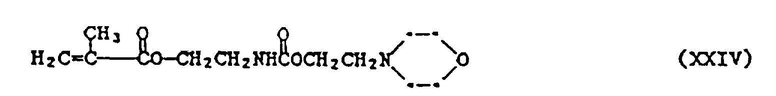

8. Verwendung einer Verbindung der Formel I nach Anspruch 1 zur Herstellung eines Homopolymers oder Copolymers, enthaltend polymerisierte Einheiten der Verbindung von Formel I.

## Patentansprüche (Patentansprüche für folgende(n) Vertragsstaat(en): ES)

1. Verfahren zur Herstellung einer Verbindung der Formel I
(X-div)_{z}Hy (I)
worin X eine polymerisierbare, ethylenisch ungesättigte Gruppe, ausgewählt aus Vinyl, 1-Niederalkylvinyl, 2-Niederalkylvinyl, 1,2-Di(niederalkyl)vinyl und Vinylniederalkyl, darstellt,
div eine zweiwertige Gruppe darstellt, ausgewählt aus Alkylen mit 2-6 Kohlenstoffatomen, beendet an einer Seite durch Carbonyloxy, wobei
ca) das Carbonyl an X gebunden ist und das Alkylen einmal durch -NH(CO)O- unterbrochen ist oder
cb) an einer Seite durch -NH(CO)- beendet ist, wobei das Amidocarbonyl an Hy gebunden ist
und einer zweiwertigen -C(O)O-aliphatischen-OC(O)NH-Aryl-NHC(O)O-aliphatischen Gruppe, wobei die endständige Carbonylgruppe, an X gebunden ist, worin Aryl Phenyl oder Naphthyl, unsubstituiert oder substituiert mit Halogen oder C₁₋₄-Alkyl, darstellt und wobei jede der aliphatischen Gruppen Alkyl mit bis zu 10 Kohlenstoffatomen darstellt,
z eine ganze Zahl von 1 bis zur Wertigkeit von Hy ist und wobei z weniger als die Wertigkeit von Hy ist, und die verbleibenden Wertigkeiten von Hy mit Wasserstoff abgesättigt sind; und
Hy eine hydrophile Gruppe darstellt, ausgewählt aus Morpholino; cyclischen Monoamidresten mit 5-7 Ringgliedern, die ausgewählt sind aus Kohlenstoffatomen und einem Stickstoffatom; gesättigten und ungesättigten cyclischen Resten mit 5-6 Ringgliedern der Formel III, 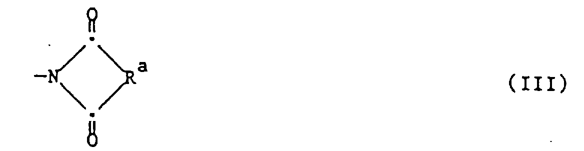
worin R^{a} Alkylen oder Alkenylen mit 2 oder 3 Kohlenstoffatomen, bedeutet,
cyclischen Amiden mit 6-7 Ringgliedern der Formel IV 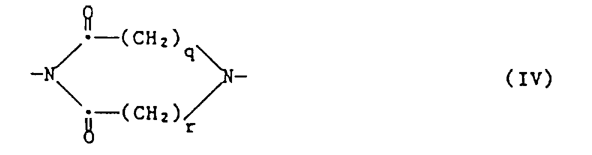
worin q und r jeweils unabhängig 0-2 sind,
cyclischen Aminen der Formel 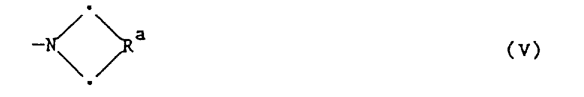
worin R^{a} Alkylen oder Alkenylen mit 2 oder 3 Kohlenstoffatomen darstellt, jeweils unsubstituiert oder substituiert mit Hydroxy-C₁₋₅-alkyl, Carboxy oder Niederalkyl;
einer zweiwertigen Gruppe der Formel XVa 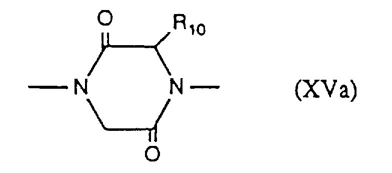
worin R¹⁰ Wasserstoff oder Carboxy darstellt und 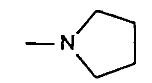
substituiert mit einer Hydroxygruppe,
gekennzeichnet durch Umsetzung einer Gruppe von Ausgangsmaterialien X-E, W-L-Y und G-Hy, wobei E gemeinsam mit W reagiert und Y gemeinsam mit G reagiert, so daß nach Umsetzung von E mit W und Y mit G die Gruppe -EW-L-YG- -div- bedeutet, in an sich bekannter Weise.

2. Verfahren nach Anspruch 1, wobei X 1-Methylvinyl, 2-Methylvinyl oder Allyl darstellt.

3. Verfahren nach Anspruch 1, wobei Hy ausgewählt ist aus
ba) Morpholino, das unsubstituiert oder mit Niederalkyl mono- bis tetra-substituiert ist;
bb) einem Amid der Formel XII 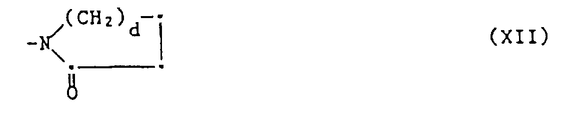 worin d 1-3 ist, jeweils unsubstituiert oder substituiert mit Niederalkyl;
bc) einer Gruppe der Formel XIII 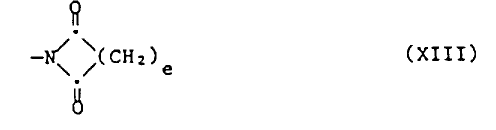 worin e 2-3 ist, jeweils unsubstituiert oder substituiert mit Niederalkyl;
bd) einer zweiwertigen Gruppe einer der Formeln XIV, XV, XVa, XVI, XVIIa oder XVIIb, 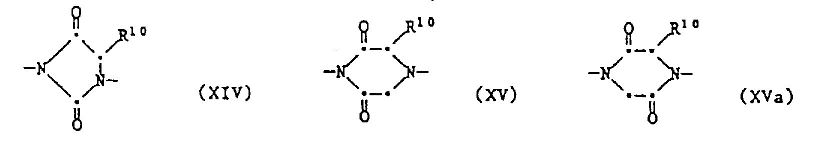 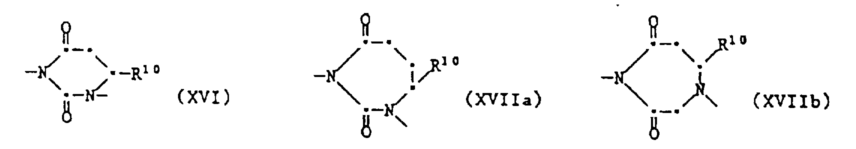 worin R¹⁰ Wasserstoff oder Carboxy darstellt,
be) 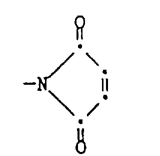
bf) 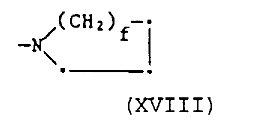 worin f eins oder zwei ist, jeweils unsubstituiert oder mit Niederalkyl substituiert;

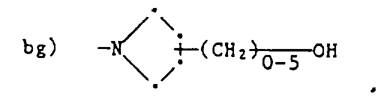

4. Verfahren nach Anspruch 1, wobei div ausgewählt ist aus
-CO-O-(CH₂)₂NHCOO(CH₂)₂-; 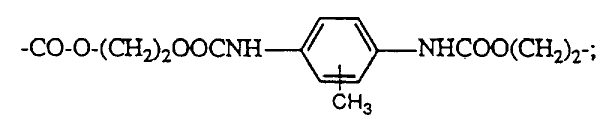
und
-CO-O-(CH₂)₂NHCO-;
worin in jedem Fall die linke Bindung an X gebunden ist.

5. Verfahren nach Anspruch 1, wobei Hy Pyrrolid-5-on-1-yl oder Morpholin-1-yl darstellt.

6. Verfahren nach Anspruch 1, wobei X Vinyl oder 1-Methylvinyl darstellt, z 1 ist; div ausgewählt ist aus -C(O)O-C₂₋₆-Alkyl-, das einmal mit -NHC(O)O- innerhalb des Alkylanteils unterbrochen ist, wobei die endständige Carbonylgruppe an X gebunden ist; -C(O)O-C₂₋₆-Alkyl-NHCO-, wobei die endständige Carbonylgruppe des Oxycarbonylanteils an X gebunden ist; und -C(O)O-C₂₋₆-Alkyl-, das einmal mit -OCONH-Aryl-NHCOO- in dem Alkylanteil unterbrochen ist, wobei die endständige Carbonylgruppe davon an X gebunden ist, worin Aryl Phenyl oder Phenyl, substituiert mit C₁₋₄-Alkyl, darstellt und Hy Pyrrolidon-5-on-1-yl oder Morpholin-1-yl darstellt.

7. Verfahren nach Anspruch 1 zur Herstellung einer Verbindung der Formel 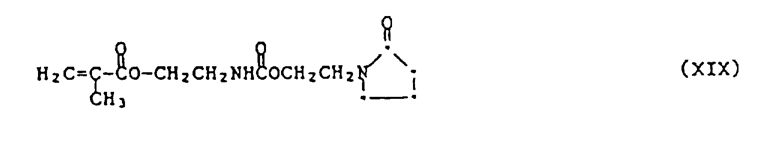 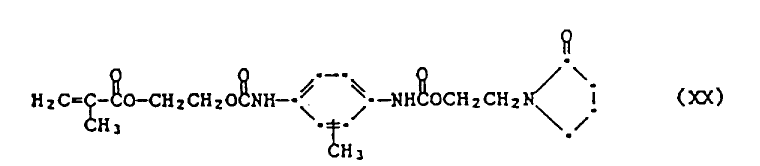 und

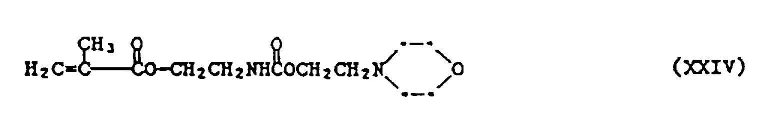

8. Verwendung einer Verbindung der Formel I nach Anspruch 1 zur Herstellung eines Homopolymers oder Copolymers, enthaltend polymerisierte Einheiten der Verbindung von Formel I.

## Revendications (Revendications pour l'(les) Etat(s) contractant(s) suivant(s): AT, BE, CH, DE, FR, GB, GR, LI, LU, NL, SE)

1. Composé de formule I,
(X-div)_{z}Hy (I)
dans laquelle
X est un groupe éthyléniquement insaturé polymérisable choisi parmi vinyle, 1-alkyle inférieur vinyle, 2-alkyle inférieur-vinyle, 1,2-di(alkyle inférieur)vinyle et vinyl-alkyle inférieur,
div est un groupe divalent choisi parmi alkylène en C₂ à C₆ qui se termine à une extrémité par un carbonyloxy,
ca) le carbonyle étant lié à X et ledit alkylène étant interrompu une fois par -NH(CO)O- ou
cb) terminé à l'autre extrémité par -NH(CO)-, l'amido carbonyle étant lié à Hy,
et un groupe divalent -C(O)-O aliphatique-OC(O)NH-aryl-NHC(O)O-aliphatique avec le groupe carbonyle terminal étant lié à X, où aryle est un phényle ou un naphtyle, non substitué ou substitué par un halogène ou un alkyle en C₁ à C₄, et où chacun des groupes aliphatiques est un alkyle ayant jusqu'à 10 atomes de carbone,
z est un nombre entier compris entre 1 et la valence de Hy, z étant inférieur à la valence de Hy, les valences restantes de Hy étant prises par des hydrogènes ; et
Hy est un groupe hydrophile choisi parmi morpholino; des radicaux mono amide cycliques ayant de 5 à 7 chaînons dans le cycle qui sont choisis parmi le carbone et un azote ; des radicaux cycliques saturés et insaturés ayant de 5 à 6 éléments dans le cycle, de formule III, 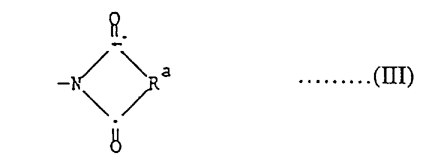
dans lequel R^{a} est un alkylène ou un alcénylène en C₂ ou C₃,
des amides cycliques ayant de 6 à 7 chaînons dans le cycle de formule IV, 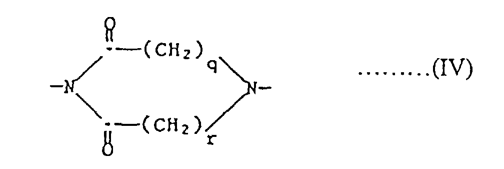 q et r valent chacun indépendamment 0-2,
des amines cycliques de formule 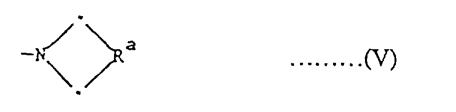 dans laquelle R^{a} est un alkylène ou un alcénylène ayant 2 ou 3 atomes de carbone ; chacun étant non substitué ou substitué par hydroxy-alkyle en C₁ à C₅, un carboxy ou un alkyle inférieur ;
un groupe bivalent de formule XVa : 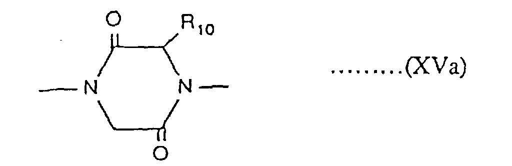 dans laquelle R¹⁰ est un hydrogène ou un carboxy, et 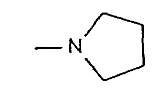 qui est substitué par un hydroxy.

2. Composé de la revendication 1, dans lequel X est 1-méthylvinyle, 2-méthylvinyle ou allyle.

3. Composé de la revendication 1, dans lequel Hy est choisi parmi :
ba) un morpholino qui est non substitué ou mono- ou tétrasubstitué par un alkyle inférieur ;
bb) un amide de formule XII 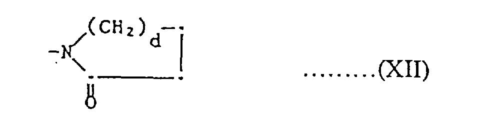 dans laquelle d vaut de 1 à 3 ; chacun étant non substitué ou substitué, par un alkyle inférieur ;
bc) un groupe de formule XIII, 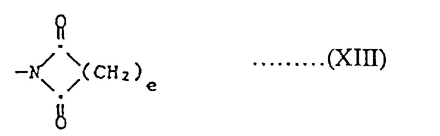 dans laquelle e est 2 ou 3, chacun étant non substitué ou substitué par un alkyle inférieur ;
bd) un groupe divalent d'une des formules XIV, XV, XVa, XVI, XVIIa ou XVIIb ; 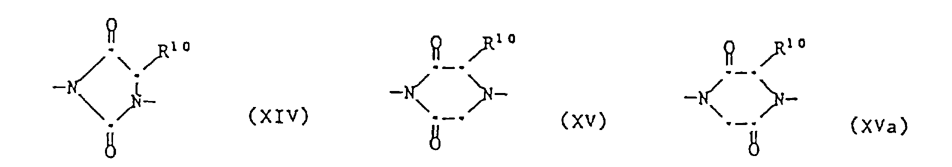 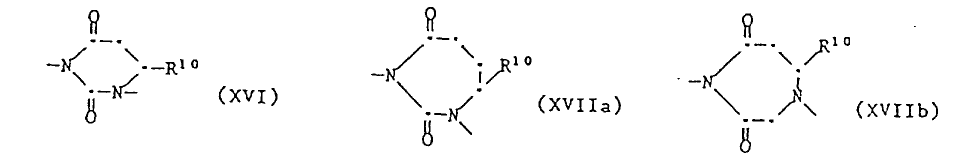 où R¹⁰ est un hydrogène ou un carboxy ;
be) 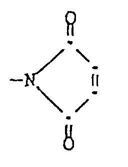
bf) 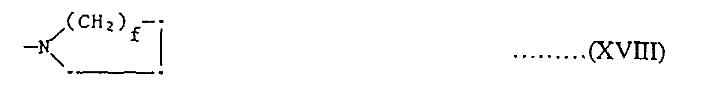 dans laquelle f vaut 1 ou 2, chacun étant non substitué ou substitué par un alkyle inférieur ;
bg)

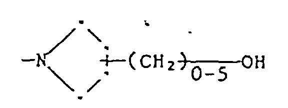

4. Composé de la revendication 1, dans lequel div est choisi parmi
-CO-O-(CH₂)₂NHCOO(CH₂)₂-; 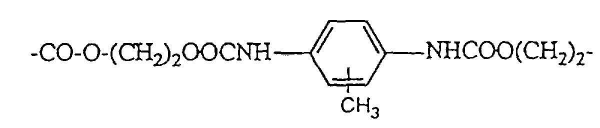
et
-CO-O-(CH₂)₂NHCO-;
auquel cas la liaison de gauche est reliée à X.

5. Composé de la revendication 1, où Hy est un pyrrolid-5-one-1-yle ou un morpholin-1-yle.

6. Composé de la revendication 1, où
X est vinyle ou 1-méthyl-vinyle, z vaut un,
div est choisi parmi -C(O)O-alkyle en C₂ à C₆-, qui est interrompu une fois par -NHC(O)O- dans la partie alkyle, le groupe carbonyle terminal étant lié à X ;
-C(O)O-alkyle en C₂ à C₆-NHCO-, le groupe carbonyle terminal de la partie oxycarbonyle étant lié à X ; et
-C(O)O-alkyle en C₂ à C₆- qui est interrompu par -OCONH-aryl-NHCOO- dans la partie alkyle dont le groupe carbonyle terminal est lié à X ; où aryle est un phényle ou un phényle substitué par un alkyle en C₁ à C₄, de préférence un méthyle ;
et Hy est un pyrrolidon-5-one-1-yle ou morpholin-1-yle.

7. Composé de la revendication 1 qui est choisi parmi les composés de formules :

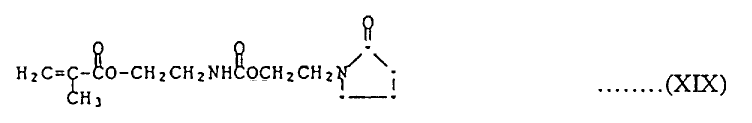

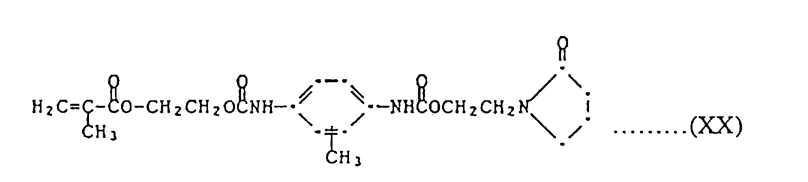

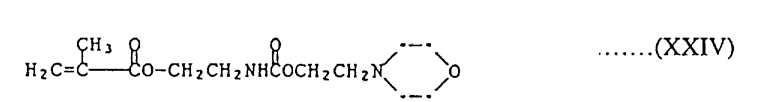

8. Utilisation du composé de formule I de la revendication 1 pour la préparation d'un homopolymère ou copolymère contenant des unités polymérisées dudit composé de formule I.

## Revendications (Revendications pour l'(les) Etat(s) contractant(s) suivant(s): ES)

1. Procédé de préparation d'un composé de formule :
(X-div)_{z}Hy (I)
dans laquelle
X est un groupe éthyléniquement insaturé polymérisable choisi parmi vinyle, 1-alkyle inférieur vinyle, 2-alkyle inférieur-vinyle, 1,2-di(alkyle inférieur)vinyle et vinyl-alkyle inférieur,
div est un groupe divalent choisi parmi alkylène en C₂ à C₆ qui se termine à une extrémité par un carbonyloxy,
ca) le carbonyle étant lié à X et ledit alkylène étant interrompu une fois par -NH(CO)O- ou
cb) terminé à l'autre extrémité par -NH(CO)-, l'amido carbonyle étant lié à Hy,
et un groupe divalent -C(O)-O aliphatique-OC(O)NH-aryl-NHC(O)O-aliphatique- avec le groupe carbonyle terminal lié à X, où aryle est un phényle ou un naphtyle, non substitué ou substitué par un halogène ou un alkyle en C₁ à C₄, et où chacun des groupes aliphatiques est un alkyle ayant jusqu'à 10 atomes de carbone,
z est un nombre entier compris entre 1 et la valence de Hy, z étant inférieur à la valence de Hy, les valences restantes de Hy étant prises par des hydrogènes ; et
Hy est un groupe hydrophile choisi parmi morpholino ; des radicaux mono amide cycliques ayant de 5 à 7 chaînons dans le cycle qui sont choisis parmi le carbone et un azote ; des radicaux cycliques saturés et insaturés ayant de 5 à 6 éléments dans le cycle, de formule III, 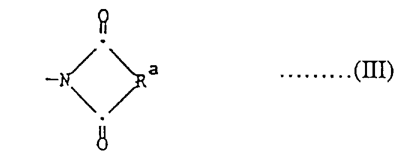
dans lequel R^{a} est un alkylène ou un alcénylène en C₂ ou C₃,
des amides cycliques ayant de 6 à 7 chaînons dans le cycle de formule IV, 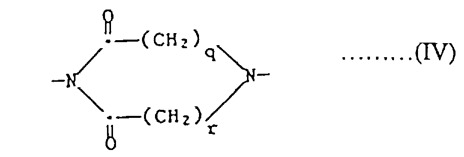 q et r valent chacun indépendamment 0-2,
des amines cycliques de formule 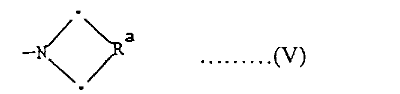 dans laquelle R^{a} est un alkylène ou un alcénylène ayant 2 ou 3 atomes de carbones;
chacun étant non substitué ou substitué par hydroxy-alkyle en C₁ à C₅, un carboxy ou un alkyle inférieur;
un groupe bivalent de formule XVa : 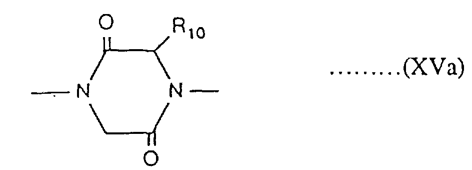 dans laquelle R¹⁰ est un hydrogène ou un carboxy, et 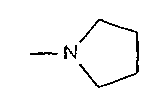 qui est substitué par un hydroxy,
caractérisé en ce qu'on fait réagir un ensemble de produits de départ X-E, W-L-Y et G-Hy où E est coréactif avec W et Y est coréactif avec G de manière que lorsque les réactions de E avec W et de Y avec G sont complètes, le groupe -EW-L-YG- est -div-, de façon connue.

2. Procédé de la revendication 1, dans lequel X est 1-méthylvinyle, 2-méthylvinyle ou allyle.

3. Procédé de la revendication 1, dans lequel Hy est choisi parmi
ba) un morpholino qui est non substitué ou mono- ou tétrasubstitué par un alkyle inférieur ;
bb) un amide de formule XII 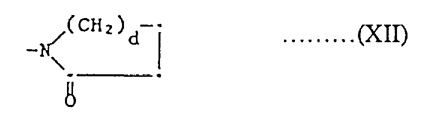 dans laquelle d vaut de 1 à 3 ; chacun étant non substitué ou substitué, par un alkyle inférieur ;
bc) un groupe de formule XIII, 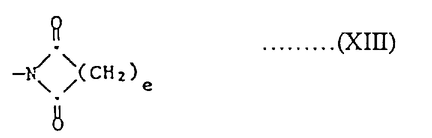 dans laquelle e est 2 ou 3, chacun étant non substitué ou substitué par un alkyle inférieur ;
bd) un groupe divalent d'une des formules XIV, XV, XVa, XVI, XVIIa ou XVIIb. 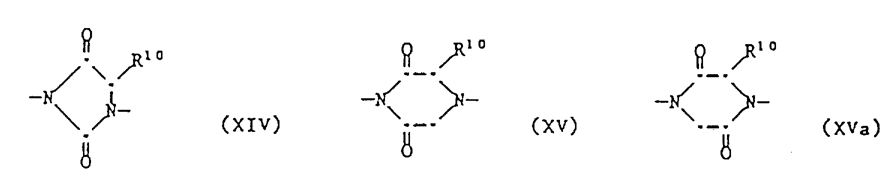 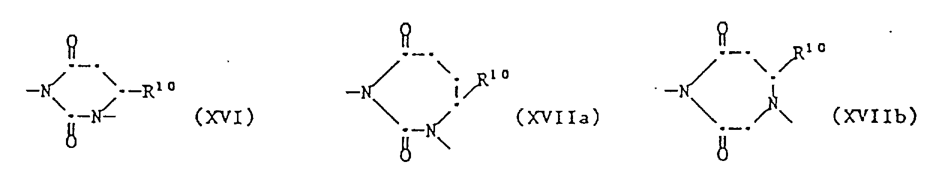 où R¹⁰ est un hydrogène ou un carboxy ;
be) 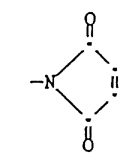
bf) 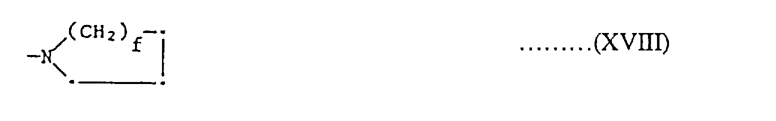 dans laquelle f vaut 1 ou 2, chacun étant non substitué ou substitué par un alkyle inférieur ;
bg)

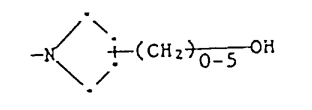

4. Procédé de la revendication 1, dans lequel div est choisi parmi
-CO-O-(CH₂)₂NHCOO(CH₂)₂-; 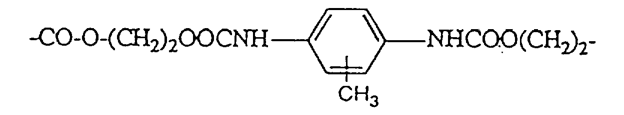
et
-CO-O-(CH₂)₂NHCO-;
auquel cas la liaison de gauche est reliée à X.

5. Procédé de la revendication 1, où Hy est un pyrrolid-5-one-1-yle ou un morpholin-1-yle.

6. Composé de la revendication 1, où X est vinyle ou 1-méthyl-vinyle, z vaut un.
div est choisi parmi -C(O)O-alkyle en C₂ à C₆-, qui est interrompu une fois par -NHC(O)O- dans la partie alkyle, le groupe carbonyle terminal étant lié à X ;
-C(O)O-alkyle en C₂ à C₆-NHCO-, le groupe carbonyle terminal de la partie oxycarbonyle étant lié à X ; et
-C(O)O-alkyle en C₂ à C₆- qui est interrompu par -OCONH-aryl-NHCOO- dans la partie alkyle dont le groupe carbonyle terminal est lié à X ; où aiyle est un phényle ou un phényle substitué par un alkyle en C₁ à C₄, de préférence un méthyle ;
et Hy est un pyrrolidon-5-one-1-yle ou morpholin-1-yle.

7. Procédé de la revendication 1 de préparation d'un composé de formules 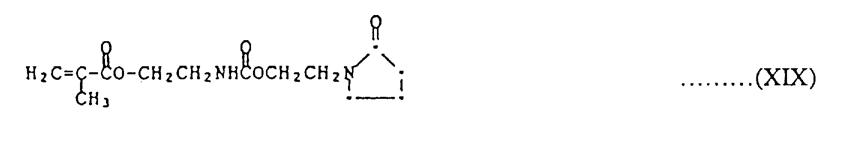 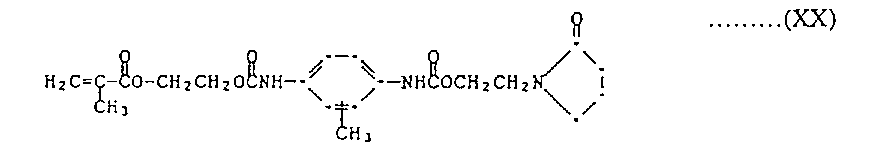 et

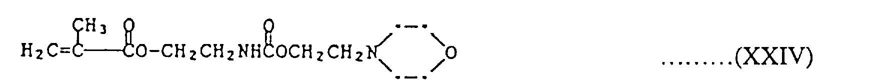

8. Utilisation du composé de formule I de la revendication 1 pour la préparation d'un homopolymère ou copolymère contenant des unités polymérisées dudit composé de formule I.
